# EUROPÄISCHE PATENTSCHRIFT

(11) **EP 2 050 664 B1**
(45) Veröffentlichungstag und Bekanntmachung des Hinweises auf die Patenterteilung: **14.04.2010**
(21) Anmeldenummer: 07020443.3
(22) Anmeldetag: 18.10.2007
(51) Int. Cl.: B62D 55/30

(54) **Raupenfahrwerk**
Crawler undercarriage
Train de roulement à chenilles

(43) Veröffentlichungstag der Anmeldung: 22.04.2009
(73) Patentinhaber: Joseph Voegele AG, 68146 Mannheim (DE)
(72) Erfinder: Weiser, Ralf, 68526 Ladenburg (DE)
(74) Vertreter: Grünecker, Kinkeldey, Stockmair & Schwanhäusser Anwaltssozietät

(56) Entgegenhaltungen:
- WO-A-95/11816

## Beschreibung

Die Erfindung betrifft ein Raupenfahrwerk gemäß Oberbegriff des Patentanspruchs 1.

Bei Raupenfahrwerken, die bekannt sind aus WO 81/01395 A, US 5,927,412 A, US 6 267 459 B1, DE 4193446 A, EP 0 721 879 A, US 4,410,219 A, wird das Leitrad beim Spannen der Raupe oder Raupenkette mit dem Spannhebel um das Schwenklager des Spannhebels am Raupenträger verschwenkt. Der Spannhebel ist somit sowohl für die Kraftübertragung beim Spannen als auch die Seitenführung des Leitrades verantwortlich. Da die Schwenkachse des Spannhebels am Raupenträger einen Abstand von der Achse des Leitrades hat, ist eine stabile Seitenführung des Leitrades erschwert. Aufgrund der bei Federungsbewegungen oder beim Spannen bogenförmigen Bahn der Achse des Leitrades, verändert sich die Geometrie des Raupenfahrwerks häufig. Es wirken nicht nur vom Leitrad seitliche Kräfte auf den Spannhebel und dessen Lagerung ein, sondern auch seitliche Kraftkomponenten des Spannzylinders. Daraus können ein instabiles Fahrverhalten mit der Gefahr des Abgehens der Raupe oder Gliederkette und starker Verschleiß in den jeweiligen Lagerungen resultieren.

Bei einem aus WO-A-95/11816 bekannten Raupenfahrwerk ist die Achse des Leitrades in einem Schiebeteil gelagert, der in einem an einem Getriebegehäuse festgelegten Schacht linear geführt wird. Ein zwischen dem Getriebegehäuse und dem Schiebeteil angeordneter Spannzylinder beaufschlagt den Schiebeteil in Spannrichtung.

Der Erfindung liegt die Aufgabe zugrunde, ein Raupenfahrwerk der eingangs genannten Art anzugeben, das sich durch eine kompakte Spannvorrichtung auszeichnet, die eine stabile Seitenführung des Leitrades ermöglicht, und die Spannkraft frei von Querkräften auf das Leitrad überträgt.

Die gestellte Aufgabe wird mit den Merkmalen des Patentanspruchs 1 gelöst.

Da das zumindest eine Leitrad in dem Führungsteil abgestützt ist, der seinerseits im Raupenträger ausschließlich linear geführt ist, ist der Spannhebel von Stabilisierungsaufgaben für das Leitrad freigestellt, und wird eine stabile Seitenabstützung des Leitrades bei Einfederbewegungen oder Spannbewegungen sichergestellt. Das Spannglied überträgt zwar die Spannkraft über den Spannhebel auf den Führungsteil und damit das Leitrad. Jedoch erfolgt diese Kraftübertragung ohne unerwünschte Seitenkräfte, da der Gleitstein ausschließlich Kräfte in der linearen Bewegungsrichtung des Führungsteils zum Leitrad gelangen lässt, und bei seiner Gleitbewegung die Unterschiede zwischen der Schwenkbewegung des Spannhebels und der Linearbewegung des Führungsteils kompensiert. Da die Spannkraft vom Spannhebel und dem Gleitstein auf den Führungsteil übertragen wird, lässt sich ein günstiger Kraftarm einstellen. Es ist konstruktiv eine bauliche Trennung zwischen der Seiten- und Linearführung des Leitrades und der Übertragung der Spannkraft vorgenommen. Die Spannvorrichtung baut kompakt, so dass ein geringer Abstand zwischen dem Leitrad und der nächstliegenden Laufrolle möglich ist. Ferner kann ein kleindurchmessüges Leitrad (oder ein Leitrad-Paar) verwendet werden, da das auch seitlich stabil abgestützte Führungsteil in der Linearführung hohe Seitenführungskräfte direkt in den Raupenträger überträgt. Die Flächenpressung am Gleitstein lässt sich moderat gestalten, so dass auch über lange Standzeiten nur geringer Verschleiß zu erwarten ist.

Zur Übertragung der Spannkraft und zur Abstützung des Leitrades oder eines Leitradpaares sind zwei Prinzipien zweckmäßig. Der Gleitstein ist entweder am Spannhebel schwenkbar angelenkt und wird bei Schwenkbewegungen des Spannhebels am Führungsteil quer zu dessen linearer Bewegungsrichtung verschoben, oder der Gleitstein ist am Führungsteil schwenkbar angelenkt, und wird am oder im Spannhebel bei dessen Schwenkbewegungen quer zur linearen Bewegungsrichtung des Führungsteils verschoben. In jedem Fall werden im Wesentlichen nur Spannkräfte oder Abstützkräfte im Wesentlichen parallel zur linearen Bewegungsrichtung des Führungsteils auf diesen und damit das Leitrad übertragen.

Der Gleitstein ist auf einer Schwenkachse angeordnet, die im Gleitstein eine erste Kraftübertragungsfläche in einer bestimmten Größe definiert. Dort, wo der Gleitstein mit dem Führungsteil in Kontakt ist, um die Spann- und Abstützkraft zu übertragen, definiert er eine zweite Kraftübertragungsfläche, die, Vorzugsweise, größer ist als die erste Kraftübertragungsfläche, um den Verschleiß zwischen den sich aneinander verschiebenden, ebenen Flächen zu minimieren und die Flächenpressung zu reduzieren.

Um symmetrische Kraftübertragungsverhältnisse zu erzielen, und hohe Kräfte aufnehmen bzw. ausüben zu können, sind zweckmäßig beiderseits des Führungsteils als Spannglieder z. B. je ein Spannzylinder, eine Spanneinheit oder eine Druckfeder, und ein Spannhebel vorgesehen. Die beiden Spannhebel werden über die gemeinsame Schwenkachse gekoppelt, auf der der Gleitstein mittig zwischen den Spannhebeln schwenkgelagert ist.

Bei einer besonders zweckmäßigen Ausführungsform ist der Raupenträger eine massive, hochkant stehende Stahlblechplatte als Ersatz für das übliche U-Profil oder Kastenprofil, so dass in Querrichtung Bauraum eingespart wird. Die Stahlblechplatte weist ein Linearführungsmaul für den Führungsteil auf, und zumindest einen Freiraum für den Gleitstein und die Schwenkachse. Die beiden Spannglieder und die beiden Spannhebel sind an beiden Seiten der Stahlblechplatte montiert, an der auch Laufrollen oder Laufrollen-Wippenlager angebracht sind.

Bei einer zweckmäßigen Ausführungsform ist das Linearführungsmaul für den Führungsteil an einer Seite offen. An dieser offenen Seite wird der eingesetzte Führungsteil zumindest bereichsweise von einer Führungsplatte überdeckt und seitlich abgestützt. An der anderen Seite erfolgt die Abstützung des Führungsteils direkt an der Stahlblechplatte. Alternativ kann das Linearführungsmaul an beiden Seiten offen und an beiden Seiten von je einer Führungsplatte zur seitlichen Abstützung des Führungsteils verschlossen sein. Die Führungsplatte ist zweckmäßig zu Wartungs- oder Schmierzwecken und zur Montage, lösbar angebracht. Die seitlichen Abstützungen könnten, wie gesagt, auch direkt aus dem Material der Stahlblechplätte gebildet werden. Zweckmäßiger sind jedoch die Führungsplatten abnehmbar montiert, um die Montage und Wartung zu vereinfachen, und um die Führungsplatten aus einem gegebenenfalls hochwertigeren oder anderen Material auszubilden als die Stahlblechplatte, da die Führungsplatten hinsichtlich Verschleißfestigkeit und Festigkeit besonders hohen Anforderungen ausgesetzt sein können.

Bei einer zweckmäßigen Ausführungsform greift der Gleitstein in den Führungsteil ein, so dass sein Kontaktbereich mit dem Führungsteil nach außen gegen Verschmutzungen abgeschirmt ist (Schmierstoffvorrat) und der Gleitstein zusätzlich geführt wird. Der Gleitstein kann zur Kopplung mit dem Führungsteil seitliche Führungszapfen tragen, die in Öffnungen, z. B. in von innen nach außen offene Schlitze, im Führungsteil eingreifen und ggf. verhindern, dass der Gleitstein ungleichförmige Relativbewegungen in Kontakt mit dem Führungsteil ausführt. Außerdem ermöglichen die Führungszapfen das Zurückziehen des Führungsteils über den Gleitstein.

Um durch den jeweiligen Schlitz das Eindringen von Verunreinigungen zu verhindern, ist es zweckmäßig, den Schlitz außenseitig durch eine Führungsplatte für den Führungsteil abzudecken. Alternativ könnte der Gleitstein stumpf am Ende des Führungsteils anstehen, oder U-förmig außen um das Ende des Führungsteils herum greifen. Bei einer weiteren Alternative durchsetzt die Schwenkachse zwischen den beiden Spannhebeln direkt eine Öffnung im Führungsteil, und stützt sich die Schwenkachse dann in dieser Öffnung im Führungsteil über den Gleitstein ab. Dies wäre eine noch kompaktere Lösung.

Zwei versetzte Führungszapfen in dem Schlitz oder den Schlitzen verhindern das Verschwenken des Gleitsteins um die Schwenkachse in entlastetem Zustand der Spannvorrichtung.

Aufgrund der Kompaktheit der Spannvorrichtung kann an dem Raupenträger eine erste, dem Leitrad nächstliegende Laufrolle angrenzend an den oder überlappend mit dem jeweiligen Spannhebel unterhalb des Spannglieds angeordnet sein. Vorzugsweise sind die Laufrollen jeweils in Tandemanordnung an Wippenlagern am Raupenträger abgestützt. Das erste Wippenlager könnte direkt unterhalb des Spannglieds montiert sein.

Um einen günstigen Kraftarm für die Übertragung der Spannkraft und Abstützkraft zu erzielen, ist es zweckmäßig, wenn am Spannhebel die Schwenkachse für den Gleitstein in etwa mittig zwischen einem Spannglied-Anlenklager und einem Raupenträger-Schwenklager des Spannhebels angeordnet ist. Vorzugsweise, wird die Schwenkachse mit einer seitlichen Versetzung gegenüber einer Verbindungslinie zwischen den beiden Lagern platziert.

Das Anlenklager kann zwei Lagerböcke am Spannhebel umfassen, um die hohen Kräfte verschleißfrei und ohne seitliche Komponenten auf den Spannhebel zu übertragen. Ein Anlenkzapfen durchsetzt die zwei Lagerböcke. Ein Kolbenstangenauge kann z. B. an dem Anlenkzapfen angelenkt sein. Zweckmäßig wird zwischen dem Kolbenstanaenauae und dem Anlenkzapfen eine Art Kugelgelenk vorgesehen, um keine seitlichen Kraftkomponenten zwischen der Kolbenstange des Spannzylinders und den Spannhebel entstehen zu lassen.

Schließlich kann es zweckmäßig sein, die Positionen der Schwenkachse am Spannhebel und des Raupenträger-Schwenklagers sowie des Spannglieds am Raupenträger so auf die Position des Führungsteils und dessen Gegenfläche abzustimmen, dass die Richtung der von der Schwenkachse übertragenen Spannkraft zur linearen Bewegungsrichtung des Führungsteils zumindest im Wesentlichen parallel ist. Aus der Schwenkbewegung des Spannhebels werden mit diesem Konzept keine schräg zum Führungsteil im Linearführungsmaul gerichtete Kraftkomponenten entwickelt, so dass der Führungsteil stets leichtgängig bewegbar ist und wenig Verschleiß unterliegt.

Anhand der Zeichnungen werden Ausführungsformen des Erfindungsgegenstandes erläutert. Es zeigen:
- Fig. 1: eine Perspektivansicht, von außen, schräg unten eines Teils eines Raupen- fahrwerks,
- Fig. 2: eine Perspektivansicht, mit Blickrichtung aus der Zeichenebene von Fig. 1, auf das Raupenfahrwerk, mit teilweise demontierten Komponenten,
- Fig. 3: eine Perspektivansicht ähnlich der von Fig. 2, unter teilweise Weglassung von Komponenten, und
- Fig. 4: eine Detail-Perspektivansicht

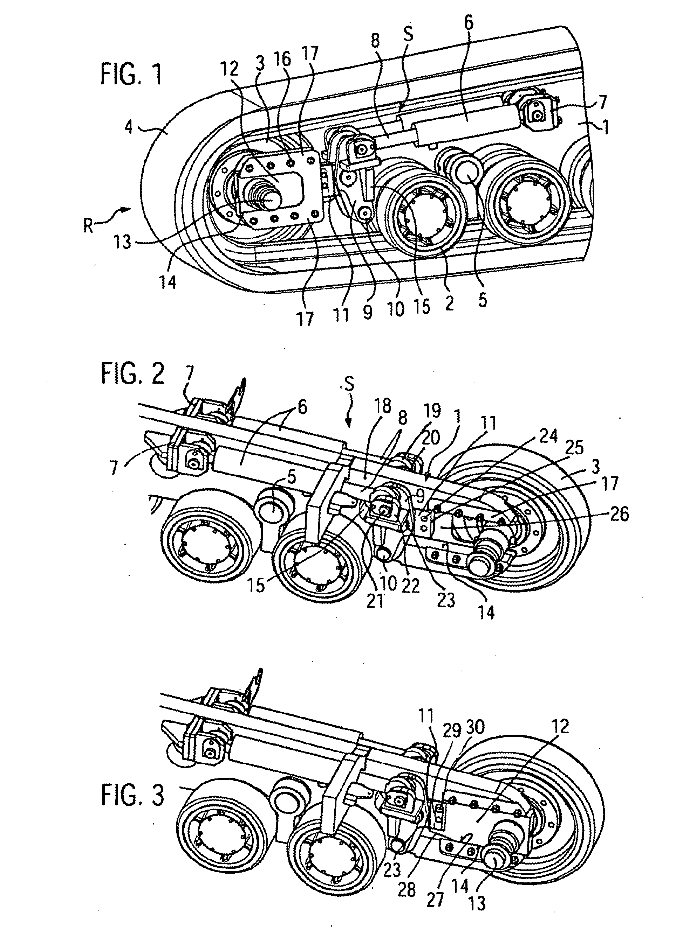

Ein Raupenfahrwerk R in Fig. 1, beispielsweise ein Gummiraupenfahrwerk für einen Straßenfertiger oder Beschicker, weist vorne an einem Raupenträger 1 ein breites oder zwei schmalere Leiträder 3, jeweils mit einem Vollgummimantel, und jeweils paarweise an Wippenlagerungen 5 angeordnete Laufrollen 2 auf. (Ein Leitrad 3 eines Paares ist der Übersichtlichkeit halber weggelassen). Die Laufrollen 2 an beiden Seiten des Raupenträgers 1, und die Leiträder 3 werden von einer Gummiraupe 4 umschlungen, die auch über ein nicht gezeigtes Antriebsrad verläuft. An zumindest einer Seite des Raupenträgers 1 ist als Spannglied 6 ein beispielsweise hydraulischer Spannzylinder in einem Spannzylinderlager 7 montiert. Das Spannglied 6 könnte auch eine mechanische Spanneinheit oder eine Druckfeder sein. Gemäß Fig. 2 und 3 sind sogar an beiden Seiten des Raupenträgers 1 Spannzylinder gleicher Auslegung montiert. Der Spannzylinder besitzt eine Kolbenstange 8, die an einem Spannhebel 9 angesenkt ist, der in einem Schwenklaaer 10 schwenkbar am Raupentäger 1 gelagert ist. Der Spannhebel 9 wirkt mit einem anhand der Fig. 2, 3 und 4 erläuterten Gleitstein 11 zusammen, der einen Führungsteil 12 einer Spannvorrichtung S beaufschlagt. Im Führungsteil 12, der z. B. blockartig ausgebildet ist, ist eine Achse 13 der Leiträder 3 angeordnet. Der Führungsteil 12 ist in einem Linearführungsmaul 14 des Raupenträgers 1 ausschließlich linear geführt beweglich. An das Linearführungsmaul 14, schließt sich ein Freiraum 15 an. Gegebenenfalls ist der Freiraum 15 vom Linearführungsmaul 14 getrennt im Raupenträger 1 ausgebildet. An den unteren und oberen Außenrändern des Linearführungsmauls 14 sind vertiefte Fassungen 17 mit Schraubbohrungen 16 für Führungsplatten 26 (Fig. 2) eingeformt. In Fig. 1 ist die an der Sichtseite erforderliche Führungsplatte 26 entfernt.

Der (die) Spannzylinder dient (dienen) als Spannglied(er) zum Spannen der Raupe 4 und zum federnden Abstützen des Leitrades 3. Der Gleitstein 11 wandelt die Schwenkbewegungen des Spannhebels 9 im Schwenklager 10 in lineare Bewegungen des Führungsteils 12 um.

In Fig. 2, in der beide Spannzylinder und beide Spannhebel 9 an den Seiten des Raupenträgers 1 zu sehen sind, ist der Führungsteil 12 aus dem Linearführungsmaul 14 entfernt. Die in Ansichtsrichtung hinten liegende Führungsplatte 26 ist so montiert, dass sie von den geradlinigen Begrenzungen des Linearführungsmauls 14 aus die Seite des Führungsteils 12 übergreift, und auch einen erheblichen Teil des Führungsteils 12 am dem Leitrad 3 abgewandten Ende abdeckt, und so den Führungsteil 12 seitlich abstützt.

Der Raupenträger 1 ist eine hochkant angeordnete, dicke und massive Stahlblechplatte 18, an der die Komponenten des Raupenfahrwerks R und der Spannvorrichtung S montiert sind.

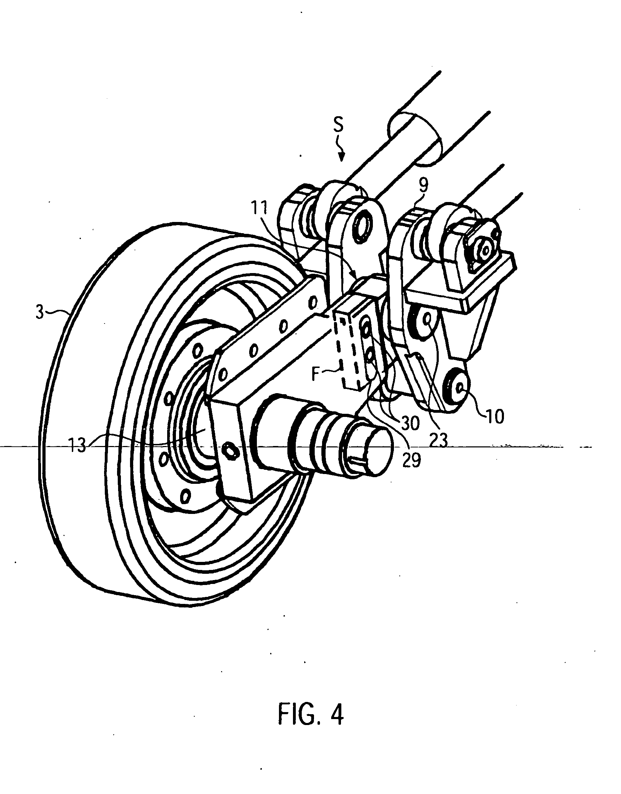

Ein Kolbenstangenauge 19 der Kolbenstange 8 sitzt gelenkig auf einem Querzapfen 21 in einem Spannzylinder-Lager des Spannhebels 9. Dieses Lager weist zwei beabstandete Lagerböcke 22 auf. Zweckmäßig ist das Kolbenstangenauge 19 mittels eines Kugelgelenks 20 auf dem Querzapfen 21 gelagert. In etwa in der Mitte zwischen den Lagern 22 und 10 ist bei dieser Ausführungsform am Spannhebel 9 eine Schwenkachse 23 für den Gleitstein 11 angeordnet. Die Schwenkachse 23 ist hier gegenüber einer die Lager 22, 10 verbindenden, gedachten Linie etwas in Richtung zum Leitrad 3 versetzt, könnte jedoch auch in dieser Linie liegen, oder zur anderen Seite versetzt sein. Die Schwenkachse 23 koppelt beide Spannhebel 9 und lagert den Gleitstein 11. Der Gleitstein 11 besitzt eine ebene Frontfläche 25, die zur Zusammenarbeit mit einer GegAnfläche F des Führungsteils 12 (Fig. 4) bestimmt ist. Ferner können im Gleitstein 11 Bohrungen 24 für dort einzusetzende Führungszapfen 30 (Fig. 3) vorgesehen sein.

Die Spannkraft der Spannzylinder wird über die Spannhebel 9 und die Schwenkachse 23 mit einer Schwenkbewegung auf den Gleitstein 11 übertragen. Der Gleitstein 11 wandelt diese Schwenkbewegung in die lineare Bewegung des Führungsteils 12 um, wobei der Gleitstein 11 quer zur linearen Bewegungsrichtung des Führungsteils 12 im Linearführungsmaul 14 an dem Führungsteil 12 gleitet.

In Fig. 3 ist der Führungsteil 12 in das Linearführungsmaul 14 eingesetzt. Der Gleitstein 11 greift in den Führungsteil 12 ein, der beispielsweise an dem Gleitstein 11 zugewandten Ende Ü-förmig ausgehöhlt ist (Fig. 4). Im Führungsteil 12 sind beispielsweise an beiden Seiten Führungsschlitze 29 vorgesehen, in die die Führungszapfen 30 des Gleitsteins 11 eingreifen. Der Führungsteil 12 ist beispielsweise nur im vorderen Bereich und dem Bereich der Achse 13 mit parallelen, geraden Passflächen 27 exakt in das Linearführungsmaul 14 eingepasst, während sein hinteres Ende keilförmig verjüngt ist (bei 28). Wenn in Fig. 3 auch die an der Sichtseite erforderliche Führungsplatte 26 montiert ist, kann sie den Führungsschlitz 29 von außen her abdecken.

Der montierte Führungsteil 12 wird im Linearführungsmaul 14 oben und unten linear geführt, und gleichzeitig an beiden Seiten spielfrei durch die Führungsplatten 26 abgestützt.

Bei der in Fig. 4 gezeigten Ausführungsform steht der Gleitstein 11 mit der ebenen Frontfläche 25 (mit der Form eines hochkant stehenden Rechtecks) stumpf an der hinteren, ebenfalls ebenen Gegenfläche F am Ende des Führungsteils 12 an. Beispielsweise ist am Ende des Führungsteils 12 eine durch zwei Seitenwangen 12a begrenzte Tasche geformt, in die der Gleitstein 11 mit einer Nase eingreift, die die ebene Frontfläche 25 definiert, und in der an zumindest einer Seite zwei übereinander platzierte Führungsstifte 30 angeordnet sind. Die Führungsstifte 30 dienen zur Kopplung des Gleitsteins 11 mit dem Führungsteil 12 (um den Führungsteil 12 über den Spannhebel 9 zurückziehen zu können) und ggf. zur Verdrehsicherung des Gleitsteins 11 um die Schwenkachse 23 in entlastetem Zustand der Spannvorrichtung. Die Dimensionierung der Frontfläche 25 des Gleitsteins 11 (und der Gegenfläche F des Führungsteils 12) und die Positionierung der Schwenkachse 23 sind so aufeinander abgestimmt, dass im gespannten und aktiven Zustand der Spannvorrichtung und bei Reibkontakt zwischen dem Gleitstein 11 und dem Führungsteil 12 ein Verschwenken des Gleitsteins 11 um die Schwenkachse 23 verhindert wird.

Bei einer alternativen Ausführungsform könnte der Gleitstein 11 im Spannhebel 9 quer zur linearen Bewegungsrichtung des Führungsteils 12 beweglich abgestützt sein. In diesem Falle wäre die Schwenkachse 23 im Führungsteil 12 gelagert.

Die Schwenkachse 23 definiert eine Kraftübertragungsfläche einer bestimmten Größe. Die Frontfläche 25 des Gleitsteins 11 ist beispielsweise größer als diese bestimmte erste Kraftübertragungsfläche, um die Flächenpressung zwischen dem Gleitstein 11 und dem Führungsteil 12 zu reduzieren.

Bei einer weiteren alternativen Ausführungsform könnte die Schwenkachse 23 direkt am Führungsteil 12 angreifen, oder eine Öffnung des Führungsteils 12 durchsetzen und in dieser Öffnung quer zur linearen Bewegungsrichtung des Führungsteils 12 beweglich angreifen, ggf. unter Vermittlung des Gleitsteins 11.

Bei einer weiteren alternativen Ausführungsform könnte ein einziges, mittig an der Oberseite des Raupenträgers oder in dessen Oberseite versenkt montiertes Spannglied 6 vorgesehen sein, z. B. ein Spannzylinder, dessen Kolbenstange 8 über einen durchgehenden Querzapfen. (ähnlich den Querzapfen 21 in Fig. 2) die beiden Spannhebel 9 gemeinsam betätigt.

## Patentansprüche

1. Raupenfahrwerk (R), insbesondere für mit einem Gummiraupenfahrwerk ausgestattete Straßenfertiger oder Beschicker, mit wenigstens einem Leitrad (3) und Laufrollen (2) an einem Raupenträger (1), und wenigstens einem Antriebsrad für die Raupe (4), und mit einer Leitrad-Spannvorrichtung (S) mit wenigstens einem Spannglied (6), das über einen am Raupenträger (1) abgestützten Spannhebel (9) auf das Leitrad (3) einwirkt, **dadurch gekennzeichnet, dass** das Leitrad (3) an einem im Raupenträger (1) ausschließlich linear beweglichen und seitlich abgestützten Führungsteil (12) angeordnet ist, und dass zwischen dem Führungsteil (12) und dem Spannhebel (9) zumindest ein quer und relativ zur linearen Bewegungsrichtung des Führungsteils (12) verschiebbarer Gleitstein (11) vorgesehen ist.

2. Raupenfahrwerk nach Anspruch 1, **dadurch gekennzeichnet, dass** der Gleitstein (11) am Spannhebel (9) auf einer Schwenkachse (23) schwenkbar angelenkt und am Führungsteil (12) verschiebbar ist.

3. Raupenfahrwerk nach Anspruch 1, **dadurch gekennzeichnet, dass** der Gleitstein (11) am Führungsteil (12) schwenkbar angelenkt und am Spannhebel (9) verschiebbar ist.

4. Raupenfahrwerk nach Anspruch 1, **dadurch gekennzeichnet, dass** beiderseits des Führungsteils (12) als Spannglieder (6) je ein hydraulischer Spannzylinder (6), eine mechanische Spanneinheit oder eine Druckfeder, und ein Spannhebel (9) vorgesehen sind, und dass die Spannhebel (9) über die gemeinsame Schwenkachse (23) gekoppelt sind, auf der der Gleitstein (11) schwenkgelagert ist.

5. Raupenfahrwerk nach wenigstens einem der vorhergehenden Ansprüche, **dadurch gekennzeichnet, dass** der Raupenträger (1) eine massive, hochkant stehende Stahlblechplatte (18) ist, die ein Linearführungsmaul (14) für den Führungsteil (12) aufweist.

6. Raupenfahrwerk nach Anspruch 5, **dadurch gekennzeichnet, dass** die Stahlblechplatte (18) einen Freiraum (15) zumindest für den Gleitstein (11) und die Schwenkachse (23) aufweist, und dass die beiden Spannhebel (9) und die Spannglieder (6) und Laufrollen (2) oder Laufrollen-Wippenlager (5) an der Stahlblechplatte (18) montiert sind.

7. Raupenfahrwerk nach Anspruch 5, **dadurch gekennzeichnet, dass** in oder an zumindest einer Seite der Stahlblechplatte (18) eine den Führungsteil (12) im Linearführungsmaul (14) zumindest bereichsweise überdeckende und seitlich abstützende Führungsplatte (25) lösbar montiert ist, vorzugsweise an beiden Seiten.

8. Raupenfahrwerk nach Anspruch 2, **dadurch gekennzeichnet, dass** der Gleitstein (11) in den Führungsteil (12) eingreift und seitliche Führungszapfen (30) trägt, die in Öffnungen (29) im Führungsteil (12) eingreifen, und den Gleitstein (11) mit dem Führungsteil (12) koppeln.

9. Raupenfahrwerk nach Anspruch 8, **dadurch gekennzeichnet, dass** der Führungsteil (12) eine von Außenwangen begrenzte Tasche für den Eingriff des Gleitsteins (11) aufweist, dass die Öffnungen (29) in etwa quer zur linearen Bewegungsrichtung des Führungsteils (12) verlaufende Schlitze in den Außenwangen sind, und dass entweder zwei übereinander liegende Führungszapfen (30) pro Seite oder an den beiden Seiten des Gleitsteins (11) vorgesehen sind.

10. Raupenfahrwerk nach Anspruch 1, **dadurch gekennzeichnet, dass** an dem Raupenträger (1) eine erste, dem Leitrad (3) nächstliegende Laufrolle (2) angrenzend an den oder überlappend mit dem Spannhebel (9) unterhalb des Spannglieds (6) angeordnet ist, vorzugsweise an einem unterhalb des Spannglieds (6) montierten Wippenlager (5).

11. Raupenfahrwerk nach wenigstens einem der vorhergehenden Ansprüche, **dadurch gekennzeichnet, dass** am Spannhebel (9) die Schwenkachse (23) für den Gleitstein (11) in etwa mittig zwischen einem Spannglied-Anlenklager (22) und einem Raupenträger-Schwenklager (10) des Spannhebels (9) angeordnet ist, vorzugsweise mit einer Versetzung gegenüber einer Verbindungslinie zwischen den Lagern (22, 10).

12. Raupenfahrwerk gemäß Anspruch 11, **dadurch gekennzeichnet, dass** das Anlenklager (22) zwei Lagerböcke am Spannhebel (9), einen die zwei Lagerböcke durchsetzenden Anlenkzapfen (21), und, vorzugsweise, ein auf dem Anlenkzapfen (21) angeordnetes Kugelgelenk (20), vorzugsweise für ein Kolbenstangenauge (19) des Spanngliedes (6), aufweist.

13. Raupenfahrwerk gemäß Anspruch 1, **dadurch gekennzeichnet, dass** die Positionen der Schwenkachse (23) am Spannhebel (9), des Schwenklagers (10) sowie des Spannglieds (6) am Raupenträger (1) so auf die Position des Führungsteils (12) und dessen mit der Frontfläche (25) des Gleitsteins (11) zusammenstehende ebene Gegenfläche (F) abgestimmt sind, dass die Richtung der von der Schwenkachse (23) über den Gleitstein (11) übertragenen Spannkraft zur linearen Bewegungsrichtung des Führungsteils (12) zumindest im Wesentlichen parallel ist.

## Claims

1. Crawler track (R), in particular for a road finisher or a road finisher-feeder vehicle equipped with a rubber crawler track, the crawler track (R) comprising at least one guide wheel (3) and caster wheels (2) at a track carrier (1), at least one driving wheel for a track (4) and a guide wheel tensioning device (S) including at least one tensioning member (6) which acts on the guide wheel (3) via a tensioning lever (9) which is pivotably supported at the track carrier (1),
**characterised in that**
the guide wheel (3) is arranged at a guide part (12) which in the track carrier (1) is laterally supported and exclusively linearly moveable, and that at least one slide block (11) is provided between the guide part (12) and the tensioning lever (9), the slide block (11) being arranged for a relative sliding movement crosswise to the linear movement direction of the guide part (12).

2. Crawler track according to claim 1, **characterised in that** the slide block (11) is pivotally linked to the tensioning lever (9) at a pivot axis (23) and slides at the guide part (12).

3. Crawler track according to claim 1, **characterised in that** the slide block (11) is pivotally linked to the guide part (12) and slides at the tensioning lever (9).

4. Crawler track according to claim 1, **characterised in that** a respective hydraulic tensioning cylinder or a mechanical tensioning unit or a pressure spring and a respective tensioning lever (9) is provided on each of both sides of the guide part (12) as tensioning members (6), and that the tensioning levers (9) are coupled by the common pivot axis (23) on which the slide block (11) is pivotally supported.

5. Crawler track as in at least one of the preceding claims, **characterised in that** the track carrier (1) is a solid thick steel sheet plate (18) which is arranged upright and which has a cut-out linear guiding jaw (14) for the guide part (12).

6. Crawler track according to claim 5, **characterised in that** the steel sheet plate (18) has a free space (15) at least for accommodating the slide block (11) and the pivot axis (23), and that both tensioning levers (19), the tensioning members (6) and the caster wheels (2) or caster wheel rocker bearings (5), respectively, are mounted at the steel sheet plate (18).

7. Crawler track according to claim 5, **characterised in that** a guiding plate (26) is removably mounted in or on at least one side of the steel sheet plate (18) which guiding plate (26) at least partially covers the guide part (12) in the linear guiding jaw (14) and which supports the guide part (12) laterally, preferably at both sides of the steel sheet plate (18).

8. Crawler track according to claim 2, **characterised in that** the slide block (11) engages into the guide part (12) and carries lateral guiding pins (30) engaging into openings (29) in the guide part (12) and coupling the slide block (11) with the guide part (12)..

9. Crawler track according to claim 8, **characterised in that** for the engagement of the slide block (11) the guide part (12) is provided with a pocket bounded by side cheeks (12a),
that the openings (29) are slots situated in the side cheeks (12a) and extend substantially crosswise to the linear movement direction of the guide part (12), and that either two guiding pins (30) are provided upon each other per side or at both sides of the slide block (11).

10. Crawler track according to claim 1, **characterised in that** a caster wheel (2), which is a first caster wheel next to the guide wheel (3), is arranged at the track carrier (1) below the tensioning member (6) adjacent to or in overlap with the tensioning lever (9), preferably at a rocker bearing (5) mounted below the tensioning member (6).

11. Crawler track according to at least one of the preceding claims, **characterised in that** the pivot axis (23) for the slide block (11) is arranged at the tensioning lever (9) approximately in the middle between a tensioning member bearing (22) and a track carrier pivot bearing (10) of the tensioning lever (9), preferably offset in relation to a connecting line between both bearings (22, 10).

12. Crawler track according to claim 11, **characterised in that** the tensioning member bearing (22) comprises two bearing blocks at the tensioning lever (9), a lateral linking pin (21) penetrating both bearing blocks, and, preferably, a universal joint (20) on the linking pin (21) for a lug (19) of a piston rod (8) of the tensioning member (6).

13. Crawler track according to claim 1, **characterised in that** the positions of the pivot axis (23) at the tensioning lever (9), of the track carrier pivot bearing (10) and of the tensioning member (6) at the track carrier (1) are matched such with the positions of the guide part (12) and of a flat counter surface (F) of the guide part (12) abutting at the front surface (25) of the slide block (11) that the direction of tensioning forces transmitted from the pivot axis (23) via the slide block (11) to the guide part (12) is at least substantially parallel to the linear movement direction of the guide part (12).

## Revendications

1. Train de roulement à chenilles (R), en particulier pour finisseur ou chargeur équipé d'un train de roulement à chenilles en caoutchouc, avec au moins une roue directrice (3) et des rouleaux porteurs (2) sur un support de chenille (1), et au moins une roue d'entraînement pour la chenille (4), et avec un dispositif tendeur de roue directrice (S) comprenant au moins un organe tendeur (6), agissant sur la roue directrice (3) par l'intermédiaire d'un levier tendeur (9) soutenu sur le support de chenille (1), **caractérisé en ce que** la roue directrice (3) est disposée sur une partie de guidage (12), déplaçable de façon exclusivement linéaire et soutenu latéralement dans le support de chenille (1), et **en ce que**, entre la partie de guidage (12) et le levier tendeur (9), est prévu au moins un patin de glissement (11), déplaçable transversalement et par rapport à la direction de déplacement linéaire de la partie de guidage (12).

2. Train de roulement à chenilles selon la revendication 1, **caractérisé en ce que** le patin de glissement (11) est articulé à pivotement sur un axe de pivotement (23) situé sur le levier tendeur (9) et est disposé de façon déplaçable sur la partie de guidage (12).

3. Train de roulement à chenilles selon la revendication 1, **caractérisé en ce que** le patin de glissement (11) est articulé à pivotement sur la partie de guidage (12) et est déplaçable sur le levier tendeur (9).

4. Train de roulement à chenilles selon la revendication 1, **caractérisé en ce que**, des deux côtés de la partie de guidage (12), sont prévus, en tant qu'organes tendeurs (6), respectivement un vérin tendeur (6) hydraulique, une unité tendeuse mécanique ou un ressort de compression, et un levier tendeur (9), et **en ce que** les leviers tendeurs (9) sont couplés par l'intermédiaire de l'axe de pivotement (23) commun, sur lequel le patin de glissement (11) est monté à pivotement.

5. Train de roulement à chenilles selon au moins l'une des revendications précédentes, **caractérisé en ce que** le support de chenille (1) présente une plaque en tôle d'acier (18) massive, placée sur chant, présentant un bec de guidage linéaire (14) pour la partie de guidage (12).

6. Train de roulement à chenilles selon la revendication 5, **caractérisé en ce que** la plaque en tôle d'acier (18) présente un espace libre (15), au moins pour le patin de glissement (11) et l'axe de pivotement (23), et **en ce que** les deux leviers tendeurs (9) et les organes tendeurs (6) et rouleaux porteurs (2) ou palier de balancier de rouleaux porteurs (5) sont montés sur la plaque en tôle d'acier (18).

7. Train de roulement à chenilles selon la revendication 5, **caractérisé en ce que**, dans ou sur au moins un côté, de préférence sur les deux côtés, de la plaque en tôle d'acier (18), une plaque de guidage (25), recouvrant, au moins par zones, et soutenant latéralement la partie de guidage (12) dans le bec de guidage linéaire (14), est montée de manière désolidarisable.

8. Train de roulement à chenilles selon la revendication 2, **caractérisé en ce que** le patin de glissement (11) s'engage dans la partie de guidage (12) et porte des tourillons de guidage latéraux (30), s'engageant dans des ouvertures (29) ménagées dans la partie de guidage (12) et couplant le patin de glissement (11) à la partie de guidage (12).

9. Train de roulement à chenilles selon la revendication 8, **caractérisé en ce que** la partie de guidage (12) présente une poche, délimitée par des joues extérieures, pour l'engagement du patin de glissement (11), **en ce que** les ouvertures (29) sont des fentes, s'étendant à peu près transversalement à la direction de déplacement linéaire de la partie de guidage (12), dans les joues extérieures, et **en ce que** soit deux tourillons de guidage (30), situés l'un au-dessus de l'autre, sont prévus par côté, soit sont prévus sur les deux côtés du patin de glissement (11).

10. Train de roulement à chenilles selon la revendication 1, **caractérisé en ce que** sur le support de chenille (1) est disposé un premier rouleau porteur (2), immédiatement à la suite de la roue directrice (3), limitrophe au levier tendeur (9) ou le chevauchant, au-dessous de l'organe tendeur (6), de préférence sur un palier de balancier (5) monté au-dessous de l'organe tendeur (6).

11. Train de roulement à chenilles selon au moins l'une des revendications précédentes, **caractérisé en ce que**, sur le levier tendeur (9), l'axe de pivotement (23) pour le patin de glissement (11) est disposé à peu près centralement entre un palier d'articulation d'organe tendeur (22) et un palier de pivotement de support de chenille (10) du levier tendeur (9), de préférence avec un décalage par rapport à une ligne de liaison entre les paliers (22, 10).

12. Train de roulement à chenilles selon la revendication 11, **caractérisé en ce que** le palier d'articulation (22) présente deux supports de paliers sur le levier tendeur (9), un tourillon d'articulation (21) traversant les deux supports de paliers, et, de préférence, une articulation à rotule (20) disposée sur le tourillon d'articulation (21), de préférence pour l'oeillet de tige de piston (19) de l'organe tendeur (6).

13. Train de roulement à chenilles selon la revendication 1, **caractérisé en ce que** les positions de l'axe de pivotement (23) sur le levier tendeur (9), du palier de pivotement (10) ainsi que de l'organe tendeur (6) sur le support de chenille (1), sont adaptées à la position de la partie de guidage (12) et de sa face conjuguée (F) plane, conjuguée à la face frontale (25) du patin de glissement (11), de manière que la direction de la force tendeuse, transmise par l'axe de pivotement (23) par l'intermédiaire du patin de glissement (11), soit au moins sensiblement parallèle à la direction de déplacement linéaire de la partie de guidage (12).
